(19) Europäisches Patentamt / European Patent Office / Office européen des brevets

(11) **EP 3 843 042 A1**

(12) **EUROPEAN PATENT APPLICATION**

(43) Date of publication:
30.06.2021 Bulletin 2021/26

(51) Int Cl.:
**G06T 11/00** (2006.01)

(21) Application number: **19219793.7**

(22) Date of filing: **27.12.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>**KH MA MD TN** | (72) Inventor: **SHECHTER, Gilad**<br>**5656 AE Eindhoven (NL)**<br><br>(74) Representative: **Philips Intellectual Property & Standards**<br>**High Tech Campus 5**<br>**5656 AE Eindhoven (NL)** |
| (71) Applicant: **Koninklijke Philips N.V.**<br>**5656 AG Eindhoven (NL)** | |

(54) **METHOD OF PROCESSING COMPUTER TOMOGRAPHY (CT) DATA FOR FILTER BACK PROJECTION (FBP)**

(57) The present invention relates to a method of processing CT data for suppressing image cone beam artefacts (CBA) in CT images, which are reconstructed from said CT data. For the reconstruction the Frequency Split method is used. However, a straightforward use of this method can lead to an un-desired increase of the residual low-frequency noise left in the basis image after applying image domain de-noising methods. This residual noise then propagates rather linearly to the spectral results. In order to avoid this increase of the noise, the method presented here uses the FS method selectively and yet effectively. Thus, in a first aspect of the invention there is provided a method of processing computer tomography (CT) data for suppressing image cone beam artefacts (CBA) in CT images to be reconstructed from said CT data. The method comprises the steps of obtaining CT data generated during a CT scan of a patient (step S1); decomposing the obtained CT data in the projection domain resulting in a plurality of decomposed sinograms (step S2); and non-uniformly spreading between said decomposed sinograms noise and/or inconsistencies that would lead to image cone beam artefacts (step S3).

FIG. 2

**Description**

FIELD OF THE INVENTION

The present invention relates to a method of processing computer tomography (CT) data for suppressing image cone beam artefacts (CBA) in CT images to be reconstructed from said CT data, to a system for processing CT data for suppressing image cone beam artefacts (CBA) in CT images, to a computer program element and to a computer readable medium.

BACKGROUND OF THE INVENTION

The introduction of cone-beam computer tomography (CT) systems offers a couple of benefits. Compared with a single slice CT system, the time for data acquisition can be reduced, the output of the x-ray tube is used more efficiently leading to a simpler heat management of the tube, and there is no longer a need for compromising z resolution in order to achieve an acceptable scan time. However, a major problem using cone-beam CT systems is to find a proper reconstruction algorithm. A large number of publications has addressed the problem of reconstruction of cone-beam projections acquired during a helical path of the source-detector system. Exact or quasi-exact algorithms exist only for a PI and a 3-PI acquisition so far. However, from a practical point of view, approximate methods still have advantages for medium size cone angles, in particular if they can use an arbitrary amount of redundant data, because using redundant data is known to reduce sampling artifacts in the z direction significantly and the sensitivity to patient motion.

Furthermore, most approximate methods can use the full detector area at arbitrary pitch values, thus using all doses applied to the patient, and support the possibility to use the ray offset technique for resolution enhancement. Another advantage may arise from a reduced computational effort. This is why the inventor of the present invention has invented with his co-inventors the frequency split method, which was made public in the year 2004 in the article "The frequency split method for helical cone beam reconstruction", Gilad Shechter, Thomas Koehler, Ami Altman and Roland Proksa, Medical Physics 31, No. 8, 2004. Since then the frequency split (FS) method has gained popularity amongst CT practitioners and is a well known technique that improves CT imaging.

The frequency split (FS) method offers a practical way for suppressing cone beam artifacts (CBA) in CT images reconstructed from non-gated helical scans. The use of this method is increasing however the low frequency noise components of the image. This increase of the noise becomes trickier in spectral CT images reconstructed after projection domain decomposition (see the article "Energy-selective reconstructions in X-ray computerized tomography", Robert E. Alvarez and Albert Macovski, Phys. Med. Biol. 21, p-733, 1796. and "K-edge imaging in x-ray computed tomography using multi-bin photon counting detectors", Ewald Roessl and Roland Proksa, Physics in medicine and biology, 52, 2007). This is because these images are known to suffer from a strong anti-correlated noise as is described in "Quantization of Liver Tissue in Dual kVp Computed Tomography using Linear Discriminant Analysis", J.Eric Tkaczyk et al, Proceedings of SPIE 7258, 2009.

This increase of the noise is also more emphasized in the presence of advanced image domain de-noising methods that manage to wipe out almost all the high frequency noise components from the image.

The inventor of the present invention thus identified the need to further reduce the problem of CBA in wide cone angle spectral CT.

SUMMARY OF THE INVENTION

There may therefore be a need for a practical method and system for suppressing CBA in wide cone angle spectral CT.

The object of the present invention is solved by the subject matter of the independent claims where further embodiments are incorporated in the dependent claims. It should be noted that the following described aspect of the invention equally applies to the method of processing computer tomography (CT) data for suppressing image cone beam artefacts (CBA) in CT images to be reconstructed from said CT data, to the system, the program element and to the computer readable medium.

According to a first aspect of the invention there is provided a method of processing computer tomography (CT) data for suppressing image cone beam artefacts (CBA) in CT images to be reconstructed from said CT data. The method comprises the steps of

- obtaining CT data generated during a CT scan of a patient (step S1);
- decomposing the obtained CT data in the projection domain resulting in a plurality of decomposed sinograms (step S2); and
- non-uniformly spreading between said decomposed sinograms noise and/or inconsistencies that would lead to image cone beam artefacts (step S3).

In other words a practical method for supressing image CBA in CT is proposed here. As opposed to the original FS method applied nowadays by the skilled person based on the paper introducing the FS method mentioned herein before, the method of the present invention restrains the low-frequency noise in these CT images, as will be explained in more detail hereinafter.

It should be note that the method of the present invention is preferably carried out on a computer, e.g. a reconstruction server, which is typically used for reconstructing CT images.

Moreover, possible applications of this method presented here are all non-gated helical scans in a variety of wide cone angle spectral CT systems, like Dual-energy systems like the dual-layer detector, the fast kVp switching or the dual source, as well as photon counting systems.

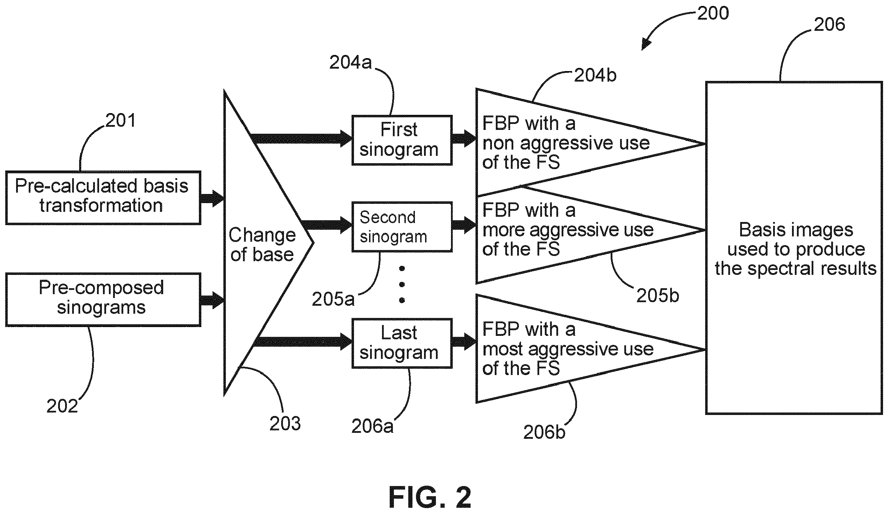

Furthermore, in the context of the present invention, the "CT images to be reconstructed" are the "base images" or "basis images" as described hereinafter in more detail. The basis images that are reconstructed from the original obtained CT data by using the method of the present invention, can for example be seen in Fig. 2 where they are shown with reference sign 206.

It should be noted regarding the step of decomposing the obtained CT data in the projection domain resulting in a plurality of decomposed sinograms that the skilled person is familiar with this method step, since this is frequently done in the field of CT reconstruction since years. Details thereabout are disclosed for example by the publications mentioned hereinbefore and will also be described hereinafter in the context of particular embodiments of the present invention.

The result of the method steps S1 to S3 as described hereinbefore are sinograms, in which the noise and/or inconsistencies that would lead to image cone beam artefacts are non-uniformly spread. Preferably, the noise and/or inconsistencies are spread as non-uniformly as possible, i.e. with a maximum in non-uniform distribution of said noise and/or inconsistencies that would lead to image cone beam artefacts. This will be explained in more detail hereinafter.

Moreover, the sinograms so provided by the present invention can then be used, i.e. after the steps S1 to S3 were applied, as data to which the well-known Frequency Split (FS) method is applied. Thus, already steps S1 to S3 provide improved data, which can then be used and processed in the reconstruction of one or more base images by applying a filter back projection (FBP) to the decomposed sinograms, to which the non-uniformly spreading was applied in step S3. In this filter back projection (FBP) the Frequency Split (FS) method can be used.

In the context of the present invention, the "Frequency Split (FS) method", shall be understood as is commonly done by the skilled person in CT reconstruction, as the well-known method that is in detail described in the article "The frequency split method for helical cone beam reconstruction", Gilad Shechter, Thomas Koehler, Ami Altman and Roland Proksa, Medical Physics 31, No. 8, 2004. When the sinograms/data resulting from steps S1 to S3 of the method of the present invention are used in said method, improved CT images can be reconstructed. This will be explained in more detail hereinafter.

The Frequency Split (FS) method as used in the context of the present invention can be understood as a filter back projection (FBP) in which at least some low frequencies of the base image are reconstructed using not all data of the provided CT data, while high frequencies of the base image are reconstructed using more, preferably all data of the CT data. Thus, the method presented herein may be seen as a method of processing CT for filter back projection.

Thus, with the method presented herein before using steps S1 to S3, a practical method for suppressing CBA in wide cone angle spectral CT is presented. As opposed to the original FS method, the herein presented method helps to restrain the low-frequency noise in these images as becomes apparent from the present disclosure.

In one exemplary embodiment, one may first apply a unitary basis transformation on the different sinograms decomposed in the projection domain. In this way one can spread the noise (and/or the inconsistencies leading to image CBA) between these sinograms as non-uniformly as possible. Next, one can reconstruct each sinogram using the FS method, thereby reducing its aggressiveness for sinograms known to be noisier than the others and/or to be less contaminated by cone angle inconsistencies.

In other words, in this embodiment a selective use, in the sense of selectively applying the FS method differently to different sinograms, is suggested. This selective use of the FS method is applicable also for dual source spectral systems.

Of course such a non-uniformly spreading as required in step S3 can be achieved in various different ways, some exemplary embodiments will be elucidated hereinafter in more detail with specific mathematically formulated embodiments.

In general, the presented method cures the problems in the prior art of reconstructing CT images, in which the frequency split method is applied, but brings in the disadvantage that the low frequency noise components of the image increase. This increase of this noise becomes even trickier in spectral CT images reconstructed after projection domain decomposition. These disadvantages are overcome with the provision of sinograms according to steps S1 to S3 described hereinbefore, since after processing them with the FS method the increase of the low frequency noise components in the image to be reconstructed will be avoided or at least be reduced.

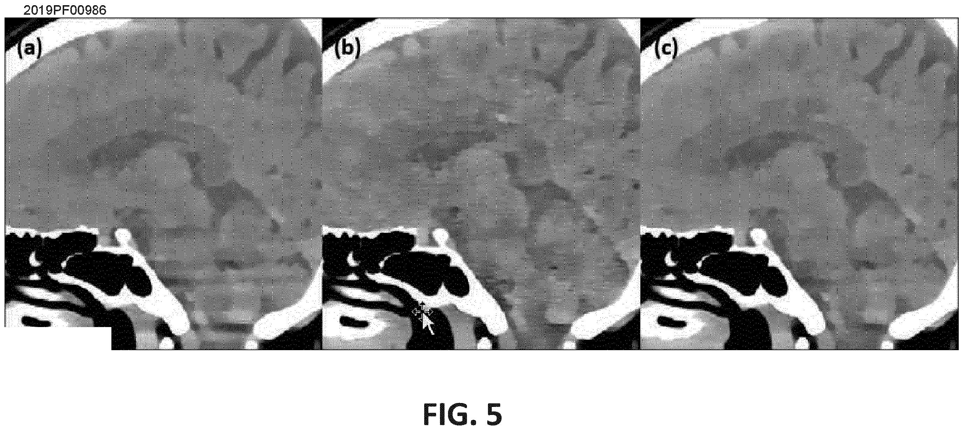

The inventor of the present invention could also demonstrate in tests shown in Figs. 5a to 5c the advantages offered by the method presented herein. The sagittal brain images shown in Figs. 5a to 5c are reconstructed from a simulated dual-energy helical scan of 8-cm beam opening at rotation center, pitch factor of 0.3, and 340 mAs. If no FS method is applied for the reconstruction as shown in Fig. 5a, an unacceptable strip-shaped CBA appears around the cerebellum. In Fig. 5b the inventor used the FS method to reconstruct the original basis elements $L_{\alpha=1,2}$ with a low frequency filter that roles down to zero at 4 line pairs per cm (LPP). Here, the suppression of CBA is accompanied by an increase of the residual low-frequency noise. This noise increase is sabotaging the differentiation between gray and white matter and is damaging the image more than the original CBA. The residual low-frequency noise (in x-y) is also responsible for the fuzziness of the image around the cerebellum. In Fig. 5c, the inventor non-uniformly spread between the decomposed sinograms noise and/or inconsistencies that would lead to image cone beam artefacts. As an example, he switched to a new basis using $U_{\beta\alpha}$ described in formula (3) below. While reconstructing the sinogram of $L_{\beta=2}$ with the FS method settings used to get Fig. 5b, the $L_{\beta=1}$ sinogram is reconstructed without using the FS method. Due to the selective use of the FS in the test of Fig. 5c, no increase of the residual low-frequency noise is observed with respect to Fig. 5a. At the same time, a clear suppression of CBA is still accomplished. Thus, as is confirmed by these tests, the method of processing computer tomography (CT) data for suppressing image cone beam artefacts (CBA) in CT images to be reconstructed from said CT data provides improved reconstruction results as compared to the prior art.

Industrial dual energy CT scanners consist of collecting signals at two energy bins. In photon counting CT systems the number of bins denoted by $n_{bin}$ can increase for example to 5. By projection domain decomposition a number of $n_m$ equivalent paths are decomposed numerically, where $n_m \leq n_{bin}$. This can be done by e.g. inverting an analytic expression, or by maximizing the likelihood function. Let us denote these equivalent paths by $A_\alpha$; $\alpha$ = 1,2 ... $n_m$. For convenience, we translate the equivalent paths to dimensionless line integrals denoted by $L_\alpha$ as follows. Here $\mu_\alpha$ is the attenuation coefficient of the material corresponding to $A_\alpha$ at some fixed energy, e.g. at 70 keV.

$$(1) \qquad L_\alpha = A_\alpha \cdot \mu_\alpha; \alpha = 1,2 \dots n_m.$$

Basis images denoted by $I_\alpha$ are then reconstructed from the sinograms of these line integrals by the filter-back-projection (FBP) method.

Therefore, according to an exemplary embodiment, projection domain decomposition is used to decompose numerically a number of $n_m$ equivalent paths.

According to another exemplary embodiment of the present invention, the noise and/or inconsistencies that would lead to image cone beam artefacts are as non-uniformly spread between said decomposed sinograms as possible.

According to another exemplary embodiment of the present invention, the method further comprises the step of

- reconstructing one or more base images by applying a filter back projection (FBP) to the decomposed sinograms, to which the non-uniformly spreading was applied in step S3, thereby using the Frequency Split (FS) method (step S4).

In other words, one or more base images are reconstructed by applying a filter back projection (FBP) in which at least some low frequencies of the base image are reconstructed using not all data of the obtained CT data, while high frequencies of the base image are reconstructed using more, preferably all data of the CT data. Thus, according to this embodiment, low frequencies of the image are reconstructed using only a small part of the projections, increasing the 2D consistency between them.

The FS method is an approximate method for the utilization of redundant data in helical cone-beam CT. It is based on the observation that the original WEDGE method provides excellent image quality if only little more than 180° data are used for back-projection, and that significant low-frequency artifacts appear if a larger amount of redundant data are used. This degradation is compensated by the frequency split method. The low-frequency part of the image can be reconstructed using little more than 180° of data, while the high frequency part is reconstructed using more, preferably all data. It is known that the FS method hardly degrades the signal-to-noise ratio of the reconstructed images and that it behaves robustly in the presence of motion.

According to another exemplary embodiment of the present invention, the Frequency Split (FS) method is characterized in that at least some low frequencies of the base image are reconstructed using not all data of the obtained CT data, while high frequencies of the base image are reconstructed using more, preferably all data of the CT data.

According to another exemplary embodiment of the present invention, the Frequency Split (FS) method is selectively applied to the plurality of sinograms.

Thus, at least for two different sinograms the parameters of the FS method are varied for different sinograms, as will be explained in detail hereinafter. According to another exemplary embodiment of the present invention, the aggressiveness of the Frequency Split (FS) method is varied for the different sinograms.

As is understood by the skilled person, the FS method applies (in contrast to previous reconstruction methods) at least two reconstructions for the CT data that are obtained, namely one reconstruction for high frequencies, where all or a lot of the data of the obtained CT data are used, and one reconstruction for the low frequencies, where not the entire CT data are used, since redundant data are neglected here. The "aggressiveness" of the FS method is thus to be understood in the context of the present invention as a parameter/indicator that describes or is indicative for how much of the redundant data are neglected by applying the FS method.

In a first example, the boundary that can be set by the user or the system and that differentiates between the high and the low frequencies, for which different reconstructions are applied, is a way of adjusting the "aggressiveness" of the FS method. When setting e.g. a high boundary value by the user or the system, thus classifying a lot of frequencies as "low frequencies" for which a certain amount of redundant data will be neglected during the reconstruction, this will be understood by the skilled reader as a rather aggressive way of applying the FS method. A rather low boundary value separating the high and low frequencies of the provided CT data will thus be understood by the skilled reader as applying the FS method rather with a low "aggressiveness" value.

In a second example, that can of course be combined with the first example, the user/the system may use the angular parameter limiting the use of the angular spectrum of the provided CT data in the reconstruction of the low frequencies sets the aggressiveness" of the FS method. Assuming that the provided CT data contain 360° degrees of a scan of the patient, said angular parameter e.g. defines that only 180° degrees, or 185° degrees, or 190° degrees, or 200° degrees, or 240° degrees are used for the reconstruction of the low frequencies. Thus, this angular parameter also determines, together with the boundary value described before, how aggressive the FS method is applied.

According to another exemplary embodiment of the present invention, the aggressiveness of the Frequency Split (FS) method is reduced for at least one sinogram, and preferably all sinograms, having a high low-frequency noise.

The user and/or system carrying out this method may determine e.g.by a user input, above which low-frequency noise level it is to be considered as a high low-frequency noise. This may be seen as part of an exemplary embodiment of the method. The method may then automatically select those sinograms out of the sinograms into which the provided CT data was decomposed in the projection domain, which fulfil this criterion. This will be explained in more detail hereinafter in the context of a detailed embodiment.

According to another exemplary embodiment of the present invention, the aggressiveness of the Frequency Split (FS) method is reduced for at least one sinogram, and preferably all sinograms, having a low level of cone angle inconsistencies.

The user and/or system carrying out this method may determine e.g.by a user input, below which level of cone angle inconsistencies it is considered to be a low level of cone angle inconsistencies. This may be seen as part of an exemplary embodiment of the method. The method may then automatically select those sinograms out of the sinograms into which the obtained CT data was decomposed in the projection domain, which fulfil this criterion. This will be explained in more detail hereinafter in the context of a detailed embodiment.

According to another exemplary embodiment of the present invention, the variation of the aggressiveness of the Frequency Split (FS) method for the different sinograms is controlled by varying a cut off and/or shape of a low-frequency filter used in the Frequency Split (FS) method.

This variation may be done automatically by a computer or may done by a user by individually controlling/adapting for each sinogram or for a group of sinograms the cut off and/or shape of a low-frequency filter used in the Frequency Split (FS) method. This will be explained in more detail hereinafter in the context of a detailed embodiment.

According to another exemplary embodiment of the present invention, the variation of the aggressiveness of the Frequency Split (FS) method for the different sinograms is controlled by modifying a back projection (BP) weighting scheme used to generate a low-frequency image.

This modification of the back projection (BP) weighting scheme may be done automatically by a computer or may done by a user by individually controlling/adapting for each sinogram or for a group of sinograms back projection (BP) weighting scheme. This will be explained in more detail hereinafter in the context of a detailed embodiment.

According to another exemplary embodiment of the present invention, the CT data originate from a non-gated helical scan of the patient's body. Thus, the presented method may also comprise the step of carrying out a non-gated helical scan of the patient's body with a CT imaging apparatus and generating the made image data as the "CT data" used in step S1 of the method presented herein.

According to second aspect of the present invention, as system for processing computer tomography (CT) data for suppressing image cone beam artefacts (CBA) in CT images to be reconstructed from said CT data is presented. The system comprises a calculation unit, which is configured for:

- receiving CT data generated during a CT scan of a patient;
- decomposing the received CT data in the projection domain resulting in a plurality of decomposed sinograms; and
- non-uniformly spreading between said decomposed sinograms noise and/or inconsistencies that would lead to image cone beam artefacts.

The system may be embodied as computer, e.g. a reconstruction server, which is typically used for reconstructing CT images. However, the system may also be comprised by a CT imaging device in which the processing of the CT data as described in steps S1 to S3 is carried out.

Some or all components of the system may be arranged in hardware such as in a suitably programmed FPGA (field-programmable-gate-array) or as hardwired IC chip. Some components of the system may be arranged in software, in hardware or in both.

One or more features disclosed herein may be configured or implemented as/with circuitry encoded within a computer-readable medium, and/or combinations thereof. Circuitry may include discrete and/or integrated circuitry, application specific integrated circuitry (ASIC), a system-on-a-chip (SOC), and combinations thereof, a machine, a computer system, a processor and memory, a computer program.

According to another exemplary embodiment of the present invention, the calculation unit is configured for reconstructing base images by applying a filter back projection (FBP) to the decomposed sinograms, to which the non-uniformly spreading of step S3 was applied, thereby using the Frequency Split (FS) method (step S3), wherein the Frequency Split (FS) method is preferably selectively applied to the plurality of sinograms.

According to another aspect of the present invention, a computer tomography (CT) system for processing CT data for suppressing image cone beam artefacts (CBA) in CT images to be reconstructed from said CT data is presented. The system comprises a CT imaging system and a system as described hereinbefore.

According to another aspect of the present invention a computer program element, which, when being executed by at least one processing unit, is adapted to cause the processing unit to perform the method:

- obtaining CT data generated during a CT scan of a patient (step S1);
- decomposing the obtained CT data in the projection domain resulting in a plurality of decomposed sinograms (step S2); and
- non-uniformly spreading between said decomposed sinograms noise and/or inconsistencies that would lead to image cone beam artefacts (step S3).

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to another aspect of the present invention, a computer readable medium is presented having stored thereon the program element as previously described.

According to a further exemplary embodiment of the present invention, a computer readable medium, such as a CD-ROM, is presented wherein the computer readable medium has a computer program element stored on it, which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

According to an exemplary embodiment of the present invention, the obtained CT data set is a wide cone angle spectral CT data set.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

BRIEF DESCRIPTION OF THE DRAWINGS

Fig 1 shows a flow diagram of a method of processing computer tomography (CT) data for suppressing image cone beam artefacts (CBA) in CT images to be reconstructed from said CT data according to an exemplary embodiment of the invention.
Fig. 2 shows flow diagram of a method of processing CT data for suppressing CBA in CT images that are reconstructed from said CT data according to an exemplary embodiment of the invention.
Fig. 3 shows typical scatter plots of the noise components which can be used in exemplary embodiments of the present invention.
Fig. 4 shows a CT system for processing CT data for suppressing image cone beam artefacts (CBA) in CT images according to an exemplary embodiment of the present invention.
Figs. 5a-c show results of an exemplary embodiment of the method of the present invention over the prior art technique of reconstructing CT images.

DETAILED DESCRIPTION OF EMBODIMENTS

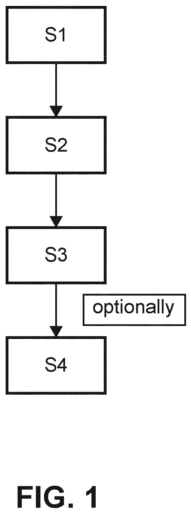

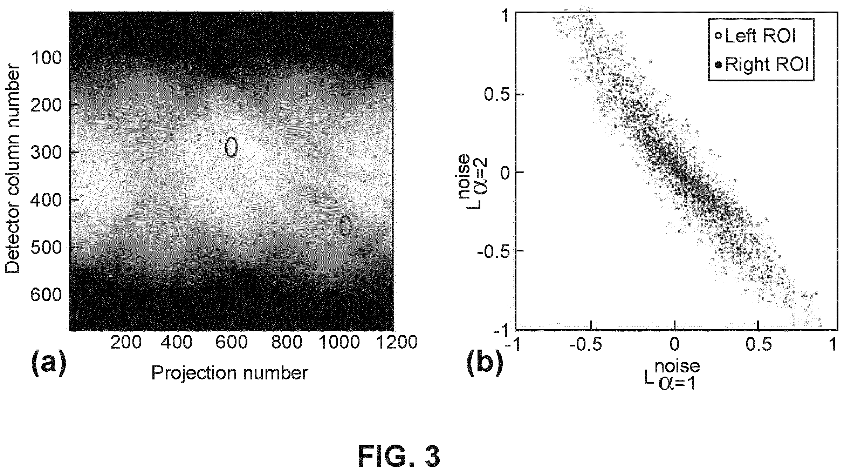

Fig. 1 shows a flow diagram method of processing CT data for suppressing image cone beam artefacts (CBA) in CT images, which are reconstructed from said CT data. For the reconstruction the FS method is used. However, a straightforward use of this method can lead to an un-desired increase of the residual low-frequency noise left in the basis image after applying image domain de-noising methods. This residual noise then propagates rather linearly to the spectral results. In order to avoid this increase of the noise, the method shown in Fig. 1 uses the FS method selectively and yet effectively. This will be explained in more detail hereinafter, also in combination with the other Figs. 2 to 4.
The method of Fig. 1 comprises the steps of receiving/providing/obtaining CT data generated during a CT scan of a patient in step S1. As a further step the obtained CT data are decomposed in the projection domain resulting in a plurality of decomposed sinograms in step S2. Moreover, a non-uniform spreading between said decomposed sinograms with respect to noise and/or inconsistencies that would lead to image cone beam artefacts is carried out in step S3. After step S3 the resulting data, i.e. the sinograms with the distributed noise/inconsistencies can be used in optional step S4. In this step a reconstruction of one or more base images is carried out by applying a filter back projection (FBP) to the decomposed sinograms, to which the non-uniformly spreading was applied in step S3, thereby using the Frequency Split (FS) method in step S4.
In other words a practical method for suppressing image CBA in wide cone angle spectral CT is proposed here. As opposed to the original FS method, the method of the present invention helps to restrain the low-frequency noise in these images, as will be explained in more detail hereinafter, especially in the context of the embodiment shown in Fig. 2.
It should be noted that the method of Fig. 1 is preferably carried out on a computer, e.g. a reconstruction server, which is typically used for reconstructing CT images. Moreover, possible applications of this method presented here are all non-gated helical scans in a variety of wide cone angle spectral CT systems, like Dual-energy systems like the dual-layer detector, the fast kVp switching or the dual source, as well as photon counting systems.
The result of the method steps S1 to S3 as described hereinbefore will result in sinograms, in which the noise and/or inconsistencies that would lead to image cone beam artefacts are non-uniformly, i.e. unevenly spread. Preferably, the noise and/or inconsistencies are spread as non-uniformly as possible, i.e. with a maximum in non-uniform distribution of said noise and/or inconsistencies that would lead to image cone beam artefacts. This will be explained in more detail in the context of Fig. 2.
Again, the Frequency Split (FS) method as used in the context of Fig. 1 can be understood as a filter back projection (FBP) in which at least some low frequencies of the base image are reconstructed using not all data of the obtained CT data, while high frequencies of the base image are reconstructed using more, preferably all data of the CT data, as will be explained now in the context of Figs. 2 and 3.
Fig. 2 shows a flow diagram of a method of processing CT data for suppressing CBA in CT base images that are reconstructed from said CT data according to an exemplary embodiment of the invention. As will become apparent from the following explanations, Fig. 2 shows a practical method for suppressing image CBA in wide cone angle spectral CT, since it helps to restrain the low-frequency noise in these images. The embodiment shown in Fig. 2 can be applied to all non-gated helical scans in a variety of wide cone angle spectral CT systems like dual-energy systems like the dual-layer detector, the fast kVp switching or the dual source, as well as photon counting systems.
In the method 200 of Fig. 2 a pre-calculated basis for transformation 201 is used to non-uniformly spread, between the decomposed sinograms 202, noise and/or inconsistencies that would lead to image cone beam artefacts. This results in a change of base, as will be explained in the detailed exemplary embodiment following hereinafter. There are of course different ways to pre-calculate the basis transformation 201. For example a-priory knowledge with the intention to spread the noise in a non-uniform manner between the different sinograms can be used. The idea here is to reconstruct each sinogram to an image using the FS method selectively for each basis element, i.e. to reduce the aggressiveness of the FS sinograms known to have higher low frequency noise than the others. Alternatively, a different a-priory knowledge can used, now with the intention to spread the inconsistencies originating from the wide cone angle in a non-uniform manner between these different sinograms. In this case, one should reconstruct the sinograms, reducing the aggressiveness of the FS for those known to contain less cone angle inconsistencies than the others. Using either one of these two approaches, or a combination of both of them, one can manage to have a satisfying reduction of CBA and at the same time to avoid increasing the residual low-frequency noise in the spectral results.

In Fig. 2 there are also the plurality of decomposed sinograms 204a, 205a, and 206a shown to which the change of base is applied for non-uniformly spreading, between the decomposed sinograms 202, noise and/or inconsistencies. Moreover, Fig. 2 shows that the FS method is applied differently to the different sinograms with respect to the aggressiveness of the FS method, see 204b, 205b, 206b. This then results in the reconstructed basis images 206, which can be used to produce the spectral results. The principle of the embodiment shown in Fig. 2 will be elucidated now with a detailed further embodiment.

Detailed exemplary embodiment

Industrial dual energy CT scanners consist of collecting signals at two energy bins. In photon counting CT systems the number of bins denoted by $n_{bin}$ can increase for example to 5. By projection domain decomposition a number of $n_m$ equivalent paths are decomposed numerically, where $n_m \leq n_{bin}$. This can be done by either inverting an analytic expression, or by maximizing the likelihood function. Let us denote these equivalent paths by $A_\alpha$; $\alpha = 1,2 \ldots n_m$.

For convenience, we translate the equivalent paths to dimensionless line integrals denoted by $L_\alpha$ as follows. Here $\mu_\alpha$ is the attenuation coefficient of the material corresponding to $A_\alpha$ at some fixed energy, e.g. at 70 keV.

$$(1) \ L_\alpha = A_\alpha \cdot \mu_\alpha; \ \alpha = 1,2 \ldots n_m.$$

Basis images denoted by $I_\alpha$ are then reconstructed from the sinograms of these line integrals by the filter-back-projection (FBP) method. These images provide all spectral results e.g. virtual mono-energetic images, iodine no water images, K-edge material images, etc. To allow an accurate quantitative imaging, these images must be free of CBA. Here, the FS method can be used. However, a straightforward use of this method can lead to an un-desired increase of the residual low-frequency noise left in $I_\alpha$ after applying image domain de-noising methods. This residual noise then propagates rather linearly to the spectral results. In order to avoid this increase of the noise, this embodiments suggests the use of the FS method selectively and yet effectively. For this purpose, we first apply in this exemplary embodiment a unitary basis transformation on $L_\alpha$

$$(2) \ L_\beta = \sum_{\alpha=1}^{n_m} U_{\beta\alpha} \cdot L_\alpha \ \forall \ \beta \in 1,2 \ldots n_m.$$

The basis transformation matrix $U_{\beta\alpha}$ can be selected using a-priory knowledge with the intention to spread the noise in a non-uniform manner between the different sinograms $L_\beta$. The idea here is to reconstruct each sinogram $L_\beta$ to an image $I_\beta$ using the FS method selectively for each basis element $\beta$. I.e. to reduce the aggressiveness of the FS for $L_\beta$ sinograms known to have higher low frequency noise than the others.

The transformation matrix $U_{\beta\alpha}$ can also be selected using a different a-priory knowledge, now with the intention to spread the inconsistencies originating from the wide cone angle in a non-uniform manner between these different sinograms. In this case, we reconstruct the $L_\beta$ sinograms, reducing the aggressiveness of the FS for those known to contain less cone angle inconsistencies than the others.

Using either one of these two approaches, or a combination of both of them, we manage to have a satisfying reduction of CBA and at the same time to avoid increasing the residual low-frequency noise in the spectral results.

Controlling the FS aggressiveness according to this exemplary method is done by varying the cut-off or shape of the low-frequency filter used by the FS method, as mentioned in the FS method paper cited hereinbefore. Alternatively, the aggressiveness can be changed by modifying the BP weighting scheme used to generate the low-frequency image.

Since transforming the basis $L_\alpha$ to $L_\beta$ is done linearly, we do not need to apply later on the inverse transformation to get $I_\alpha$ from $I_\beta$. Instead, we can extract the spectral results directly from $I_\beta$. The flow chart of this is shown in Fig. 2. We will now demonstrate exemplary embodiments of this method in more details.

This method is designed for various numbers of decomposed equivalent paths. Yet, to demonstrate it visually we address here by an example a dual energy system where $n_m = n_{bin} = 2$. We choose the basis $L_\alpha$ so that $L_{\alpha=1}$ represents the line integral through a virtual material having an energy-dependent attenuation profile that is similar to the attenuation profile of the Compton scatter mechanism in water. We complete the basis, choosing $L_{\alpha=2}$ as the line integral through the virtual material having an energy-dependent attenuation profile that is similar to the sum of the attenuation profiles of the Rayleigh scatter and photoelectric mechanisms in water.

In Fig. 3 we show typical scatter plots of the noise components of $L_\alpha$. To obtain these, we use a simulation of the NCAT mathematical phantom scan. The noise components are obtained after omitting from the noisy $L_\alpha$ their values obtained by a noiseless simulation. In (a) of Fig. 3 we show a water like sinogram of $L_{\alpha=1} + L_{\alpha=2}$ of a given detector row. We define within it two regions of interest (ROIs), see the oval contours. In (b) of Fig. 3 we show the noise components of the readings belonging to these ROIs. Fig. 3 provides two important observations. First, a clear anti-correlated behavior between $L_{\alpha=1,2}^{noise}$ with a major principal axis oriented at about -45°. Second, insensitivity of this axis with respect to the location of the readings within the sinogram. In fact, for given spectra of the system in the two energy bins, this axis also hardly changes between sinograms of different scanned objects. Following this notion we choose $U_{\beta\alpha}$ as in (3). This allows spreading the noise between the $L_\beta$ sinograms in the most non-uniform manner.

$$(3) \quad U_{\beta\alpha} = \frac{1}{\sqrt{2}} \cdot \begin{bmatrix} 1 & 1 \\ -1 & 1 \end{bmatrix} .$$

Generalizing these observations back to $n_m \geq 2$ we introduce now the covariance matrix denoted by $\Sigma_{\alpha\alpha'}$ that describes the noise correlation between the different $L_\alpha$. The unitary transformation matrix $U_{\beta\alpha}$ used in (2) helps to diagonalize $U^T\Sigma U$. Its columns are taken as the right eigenvectors of $\Sigma_{\alpha\alpha'}$. Ordering them according to their eigenvalues in a descending order, the noise within the sinograms of the paths $L_\beta$ are decreasing $\beta$ with as designed.

Choosing the matrix $U_{\beta\alpha}$ according to the covariance matrix $\Sigma_{\alpha\alpha'}$ is basing on the underlying assumption by which the amount of wide cone angle inconsistencies diffusing into the spectral results through the different path sinograms $L_\beta$ is roughly the same. However, as mentioned briefly before, another approach is to use a-priory knowledge on the patient anatomy in order to deliberately construct sinograms of $L_\beta$ that contain different amounts of wide cone angle inconsistencies. An example for such a-priory knowledge is the fact that most of the image CBA originate from the strong gradients of the cortical bone content of the patient along the rotation axis z. Here we neglect the air to soft tissue interfaces at the diaphragm region. The cortical bone X-ray attenuation can be described within the approximation involved within the two base model as a linear combination of the two virtual materials described before that define the dual-energy basis elements $L_{\alpha=1,2}$ With this input, we can use the basis transformation matrix $U_{\beta\alpha}^{CB}$ given in (5).

$$(4) \quad \mu_{CB}(E) = c_1 \cdot \mu_{\alpha=1}(E) + c_2 \cdot \mu_{\alpha=2}(E) .$$

$$(5) \quad L_\beta = \sum_{\alpha=1}^{n_m} U_{\beta\alpha}^{CB} \cdot L_\alpha ; \quad U_{\beta\alpha}^{CB} = \frac{1}{\sqrt{c_1{}^2 + c_2{}^2}} \cdot \begin{bmatrix} c_1 & c_2 \\ c_2 & -c_1 \end{bmatrix} .$$

The inventor of the present invention could also demonstrate in tests shown in Figs. 5a to 5c the advantages offered by the method presented herein. The sagittal brain images shown in Figs. 5a to 5c are reconstructed from a simulated dual-energy helical scan of 8-cm beam opening at rotation center, pitch factor of 0.3, and 340 mAs. If no FS method is applied for the reconstruction as shown in Fig. 5a, an unacceptable strip-shaped CBA appear around the cerebellum. In Fig. 5b the inventor used the FS method to reconstruct the original basis elements $L_{\alpha=1,2}$ with a low frequency filter that roles down to zero at 4 line pairs per cm (LPP). Here, the suppression of CBA is priced by an increase of the residual low-frequency noise. This noise increase is sabotaging the differentiation between gray and white matter and is damaging the image more than the original CBA. The residual low-frequency noise (in x-y) is also responsible for the fuzziness of the image around the cerebellum. In Fig. 5c, the inventor non-uniformly spreads, between the decomposed sinograms, noise and/or inconsistencies that would lead to image cone beam artefacts. As an example, he switched to a new basis using $U_{\beta\alpha}$ described in formula (3) below. While reconstructing the sinogram of $L_{\beta=2}$ with the FS method settings used to get Fig. 5b, the $L_{\beta=1}$ sinogram is reconstructed without using the FS method. Due to the selective use of the FS in the test of Fig. 5c, no increase of the residual low-frequency noise is observed with respect to Fig. 5a. At the same time, a clear suppression of CBA is still accomplished. Thus, as is confirmed by these tests, the method of processing computer tomography (CT) data for suppressing image cone beam artefacts (CBA) in CT images to be reconstructed from said CT data provides improved reconstruction results as compared to the prior art.

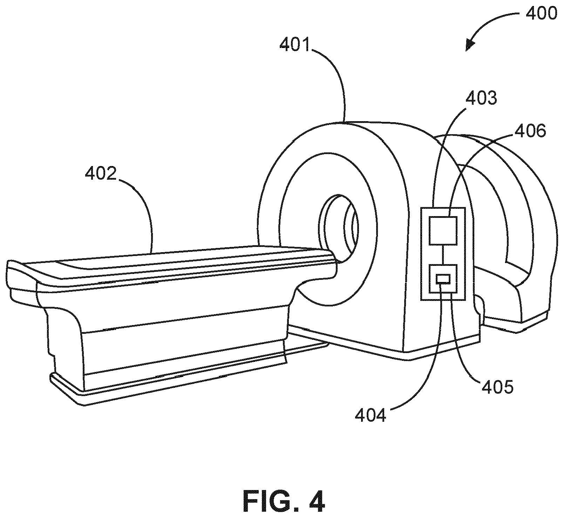

Fig. 4 shows a CT system 400 for processing CT data for suppressing image cone beam artefacts (CBA) in CT images according to an exemplary embodiment of the present invention. The system 400 comprises a CT imaging system 401, 402, and system 403 with a calculation unit (406), which is configured for:

- receiving CT data generated during a CT scan of a patient;
- decomposing the provided CT data in the projection domain resulting in a plurality of decomposed sinograms; and
- non-uniformly spreading between said decomposed sinograms noise and/or.

Also the computer program element 404 is shown, which, when being executed by at least one processing unit (PU), is adapted to cause the processing unit (PU) to perform the method as described herein.

With such a calculation unit 406 one can cure the problems in the prior art of reconstructing CT images, in which the frequency split method is applied, but brings in the disadvantage that the low frequency noise components of the image increase. This increase of this noise becomes even trickier in spectral CT images reconstructed after projection domain decomposition. These disadvantages are overcome with the calculation unit 406, since after processing the sinograms with the FS method the increase of the low frequency noise components in the image to be reconstructed will be avoided or at least be reduced.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. Method of processing computer tomography (CT) data for suppressing image cone beam artefacts (CBA) in CT images to be reconstructed from said CT data,
   the method comprising the steps of:

   - obtaining CT data generated during a CT scan of a patient (step S1);
   - decomposing the obtained CT data in the projection domain resulting in a plurality of decomposed sinograms (step S2); and
   - non-uniformly spreading, between said decomposed sinograms, noise and/or inconsistencies that would lead to image cone beam artefacts (step S3).

2. Method according to claim 1,
   wherein the noise and/or inconsistencies that would lead to image cone beam artefacts are as non-uniformly spread between said decomposed sinograms as possible.

3. Method according to claim 1 or 2, the method further comprising the step

   - reconstructing a base image by applying a filter back projection (FBP) to the decomposed sinograms, to which the non-uniformly spreading was applied in step S3, thereby using the Frequency Split (FS) method (step S4).

4. Method according to claim 3,
   wherein the Frequency Split (FS) method is **characterized in that** at least some low frequencies of the base image are reconstructed using not all data of the obtained CT data, while high frequencies of the base image are reconstructed using more, preferably all data of the CT data.

5. Method according to any of claims 3 or 4,

wherein the Frequency Split (FS) method is selectively applied to the plurality of sinograms.

6.  Method according to any of claims 3 to 5, further comprising the step
    varying an aggressiveness of the Frequency Split (FS) method for the different sinograms.

7.  Method according to claim 6,
    wherein the aggressiveness of the Frequency Split (FS) method is reduced for at least one sinogram, and preferably all sinograms, having a high low-frequency noise.

8.  Method according to claim 6 or 7,
    wherein the aggressiveness of the Frequency Split (FS) method is reduced for at least one sinogram, and preferably all sinograms, having a low level of cone angle inconsistencies.

9.  Method according to any of claims 6 to 8, further comprising the step

    - controlling the variation of the aggressiveness of the Frequency Split (FS) method for the different sinograms by varying a cut off and/or shape of a low-frequency filter used in the Frequency Split (FS) method.

10. Method according to any of claims 6 to 9, further comprising the step

    - controlling the variation of the aggressiveness of the Frequency Split (FS) method for the different sinograms by modifying a back projection (BP) weighting scheme used to generate a low-frequency image.

11. Method according to any of the preceding claims,
    wherein the CT data originate from a non-gated helical scan of the patient's body.

12. System (403) for processing computer tomography (CT) data for suppressing image cone beam artefacts (CBA) in CT images to be reconstructed from said CT data, the system comprising
    a calculation unit (406), which is configured for:

    - obtaining CT data generated during a CT scan of a patient;
    - decomposing the obtained CT data in the projection domain resulting in a plurality of decomposed sinograms; and
    - non-uniformly spreading between said decomposed sinograms noise and/or inconsistencies that would lead to image cone beam artefacts.

13. Computer tomography (CT) system (400) for processing CT data for suppressing image cone beam artefacts (CBA) in CT images to be reconstructed from said CT data, the system comprising,
    a CT imaging system (401, 402), and
    a system (403) according to claim 12.

14. A computer program element (404), which, when being executed by at least one processing unit (PU), is adapted to cause the processing unit (PU) to perform the method as per any of claims 1 to 11.

15. A computer readable medium (405) having stored thereon the program element of claim 14.

```
┌──────────┐
│    S1    │
└──────────┘
     │
     ▼
┌──────────┐
│    S2    │
└──────────┘
     │
     ▼
┌──────────┐
│    S3    │
└──────────┘
     │   ┌──────────────┐
     │   │  optionally  │
     │   └──────────────┘
     ▼
┌──────────┐
│    S4    │
└──────────┘
```

# FIG. 1

**FIG. 2**

FIG. 3

**FIG. 4**

**FIG. 5**

EP 3 843 042 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SHECHTER G ET AL: "The frequency split method for helical cone-beam reconstruction", MEDICAL PHYSICS, AIP, MELVILLE, NY, US, vol. 31, no. 8, 1 August 2004 (2004-08-01), pages 2230-2236, XP012074981, ISSN: 0094-2405, DOI: 10.1118/1.1773622 * abstract * * figures 1,2,3 * * Sections II.A and II.B * | 1-15 | INV. G06T11/00 |
| X | WO 2019/096600 A1 (KONINKLIJKE PHILIPS NV [NL]) 23 May 2019 (2019-05-23) * page 8 - page 10 * * figures 2-8 * | 1,2, 12-15 | |
| A | WO 2017/046141 A1 (KONINKLIJKE PHILIPS NV [NL]) 23 March 2017 (2017-03-23) * the whole document * | 1-15 | |
| A | GJESTEBY LARS ET AL: "Metal Artifact Reduction in CT: Where Are We After Four Decades?", IEEE ACCESS, vol. 4, 6 October 2016 (2016-10-06), pages 5826-5849, XP011624799, DOI: 10.1109/ACCESS.2016.2608621 [retrieved on 2016-10-04] * the whole document * | 1-15 | TECHNICAL FIELDS SEARCHED (IPC) G06T |
| A | WO 2017/190968 A1 (KONINKLIJKE PHILIPS NV [NL]) 9 November 2017 (2017-11-09) * the whole document * | 1-15 | |

The present search report has been drawn up for all claims

| Place of search | Date of completion of the search | Examiner |
|---|---|---|
| Munich | 5 June 2020 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 9793

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2020

| Patent document cited in search report | | | Publication date | Patent family member(s) | | | Publication date |
|---|---|---|---|---|---|---|---|
| WO 2019096600 | A1 | | 23-05-2019 | NONE | | | |
| WO 2017046141 | A1 | | 23-03-2017 | CN | 107106105 | A | 29-08-2017 |
| | | | | EP | 3221848 | A1 | 27-09-2017 |
| | | | | JP | 6402282 | B1 | 10-10-2018 |
| | | | | JP | 2018531659 | A | 01-11-2018 |
| | | | | US | 2018204306 | A1 | 19-07-2018 |
| | | | | WO | 2017046141 | A1 | 23-03-2017 |
| WO 2017190968 | A1 | | 09-11-2017 | CN | 109074635 | A | 21-12-2018 |
| | | | | EP | 3452981 | A1 | 13-03-2019 |
| | | | | JP | 2019519270 | A | 11-07-2019 |
| | | | | US | 2019122342 | A1 | 25-04-2019 |
| | | | | WO | 2017190968 | A1 | 09-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GILAD SHECHTER ; THOMAS KOEHLER ; AMI ALTMAN ; ROLAND PROKSA.** The frequency split method for helical cone beam reconstruction. *Medical Physics,* 2004, vol. 31 (8
- **ROBERT E. ALVAREZ ; ALBERT MACOVSKI.** Energy-selective reconstructions in X-ray computerized tomography. *Phys. Med. Biol.,* vol. 21, 733

- **EWALD ROESSL ; ROLAND PROKSA.** K-edge imaging in x-ray computed tomography using multi-bin photon counting detectors. *Physics in medicine and biology,* 2007, vol. 52
- **J.ERIC TKACZYK et al.** Quantization of Liver Tissue in Dual kVp Computed Tomography using Linear Discriminant Analysis. *Proceedings of SPIE,* 2009, vol. 7258